(19) Europäisches Patentamt
European Patent Office
Office européen des brevets

(11) Veröffentlichungsnummer: **0 357 059 A2**

# (12) EUROPÄISCHE PATENTANMELDUNG

(21) Anmeldenummer: **89116043.4**

(22) Anmeldetag: **31.08.89**

(51) Int. Cl.5: **H01B 1/12**

(30) Priorität: **01.09.88 DE 3829753**

(43) Veröffentlichungstag der Anmeldung: **07.03.90 Patentblatt 90/10**

(84) Benannte Vertragsstaaten: **BE CH DE FR GB IT LI NL**

(71) Anmelder: **WACKER-CHEMIE GMBH**
**Prinzregentenstrasse 22**
**D-8000 München 22(DE)**

(72) Erfinder: **Becker, Richard, Dr.-Dipl.-Chem.**
**Anton-Überreiterstrasse 17**
**D-8261 Emmerting(DE)**
Erfinder: **Blöchl, Georg, Dr.-Dipl.-Chem.**
**Wichernstrasse 11**
**D-8225 Traunreut(DE)**
Erfinder: **Bräunling, Hermann, Dr.-Dipl.-Chem.**
**Marktlerstrasse 82**
**D-8263 Burghausen(DE)**

## (54) Elektrisch leitende Polymermischungen.

(57) Die Erfindung betrifft Zusammensetzungen enthaltend

a) Polyarylenmethine, Polyheteroarylenmethine und/oder deren Salze, welche zusätzlich

b) mindestens ein weiteres Polymer, insbesondere einen Thermoplasten, enthalten, deren Herstellung und Anwendung.

EP 0 357 059 A2

# Elektrisch leitende Polymermischungen

Die vorliegende Erfindung betrifft Mischungen von Poly(hetero)arylenmethinen und deren Salzen mit anderen Polymeren.

Als Poly(hetero)arylenmethine sind hier zu verstehen Polymere mit konjugierten Dopppelbindungen, die aus hetero-und/oder carbocyclischen Ringen bzw. Ringsystemen aufgebaut sind, wobei die Ringe bzw. Ringsysteme jeweils paarweise über ein Kohlenstoffatom als Brückenglied miteinander verbunden sind und das Polymere mindestens 5 dieser Ringe bzw. Ringsysteme enthält.

## Stand der Technik

Poly(hetero)arylenmethine, deren Salze und Verfahren zur Herstellung dieser Stoffe sind bekannt.

In US-A-4,729,851 (ausgegeben am 08. März 1988, H. Bräunling et al., Wacker-Chemie GmbH) und WO 87/00678 (veröffentlicht am 29. Januar 1987) sind solche Polymere und deren Herstellung beschrieben. Die europäische Patentanmeldung 88 104 828.4 (angemeldet am 08. März 1988, H. Bräunling et al., Wacker-Chemie GmbH) beschreibt die Herstellung von basischen Polypyrrylenmethinen und deren Salzen.

Mischungen von Poly(hetero)arylenmethinen mit anderen Polymeren sind bisher nicht beschrieben.

## Aufgabe

Aufgabe der vorliegenden Erfindung war es, Polymerzusammensetzungen mit konjugierten Doppelbindungen bereitzustellen, welche mechanisch belastbar und nicht spröde sind und sich gut verarbeiten lassen. Des weiteren war es Aufgabe der vorliegenden Erfindung, die Leitfähigkeit von Poly(hetero)-arylenmethinen zu vergrößern.

## Beschreibung der Erfindung

Die vorstehend genannten Aufgaben werden durch die vorliegende Erfindung gelöst durch eine Zusammensetzung, enthaltend

a) Polyarylenmethine, Polyheteroarylenmethine und/oder deren Salze, dadurch gekennzeichnet, daß sie zusätzlich

b) mindestens ein weiteres Polymer enthält.

Komponente b) enthält vorzugsweise mindestens ein thermoplastisches Polymer. Insbesondere besteht die Komponente b) aus thermoplastischem Polymer bzw. thermoplastischen Polymeren.

Polyarylenmethine, Polyheteroarylenmethine und deren Salze können u. a. nach den in den eingangs genannten Dokumenten beschriebenen Verfahren hergestellt werden. Dies umfaßt unter anderem die Umsetzung von (Hetero)aromaten der Formel

$H\text{-}R''\text{-}H$

mit Verbindungen der Formel

$W\text{-}CH_2\text{-}R''\text{-}CW_2\text{-}R$

gegebenenfalls unter Katalyse

worin

R gleiche oder verschiedene Alkylreste mit 1 bis 8 Kohlenstoffatomen, Phenylreste oder Wasserstoffatome oder Reste der Formel $-CR'_2\text{-}Q$, wobei

Q gleiche oder verschiedene Hydroxyl-, $C_1$- bis $C_{18}$-Alkoxy-, $C_1$- bis $C_{18}$-Alkylsulfonat-, $C_1$- bis $C_{18}$-Arylsulfonat-, Trifluoracetyl-, $C_1$- bis $C_{18}$-Acyl-, gegebenenfalls substituierte Phenolatreste oder Chlor- oder Bromatome;

$R''$ gleiche oder verschiedene, gegebenenfalls durch gegebenenfalls substituierte Kohlenwasserstoffreste mit 1 bis 18 Kohlenstoffatomen substituierte monocyclische oder polycyclische (Hetero-) Arylenreste;

W u. a. gleiche oder verschiedene Hydroxyl-, Halogen- und Sulfatreste bedeuten, wobei

$W_2$ auch für das Sauerstoffatom einer Carbonylgruppe stehen kann;

$R'$ gleiche oder verschiedene Wasserstoff- oder Halogenatome bedeuten.

Beispiele für unsubstituierte (Hetero-) Arylenreste $R''$ sind o-, m- und p-Phenylenreste; 2,3-, 2,4- und 2,5-Thiophendiylreste; 2,3-, 2,4- und 2,5-Pyrroldiylreste; 2,3-, 2,4-, 2,5-Furandiylreste; 3,4- und 3,5-Pyrazoldiylreste; 2,4- und 2,5-Imidazoldiylreste; 2,4- und 2,5-Thiazoldiylreste; 3,4- und 3,5-Isothiazoldiylreste; 2,4- und 2,5-Oxa zoldiylreste; 3,4- und 3,5-Isoxazoldiylreste; 2,3-, 2,4-, 2,5-, 3,4-Pyridindiylreste sowie Diylreste von Indol, Benzofuran, Benzothiophen, Chinolin, Isochinolin, Acridin, Pyridazin, Pyrimidin, Pyrazin, Chinoxalin, Naphthalin, Anthracen, Phenanthren und Phenalen.

Als Substituenten der substituierten (Hetero-) Arylenreste $R''$ sind die in der nachfolgenden Formel (III) als Reste Y und Z genannten Reste bevorzugt.

Beispiele für Reste $R''''$ sind die aus den als Beispielen für Reste $R''$ genannten Resten durch Abstraktion von jeweils zwei Wasserstoffatomen entstehenden Dihydro(hetero)arendiylidenreste.

Salze dieser Polymere entstehen unter anderem bei deren Behandlung mit Dotierungsmitteln, wie Brönstedt- und Lewis-Säuren.

Die erfindungsgemäßen Zusammensetzungen enthalten Komponente b) vorzugsweise in Mengen von mindestens 0,1 Gewichtsteilen, insbesondere von 1 bis 100 Gewichtsteilen pro Gewichtsteil von Komponente a).

Die erfindungsgemäßen Zusammensetzungen enthalten vorzugsweise als Komponente a) ein oder mehrere Polymere, welche Einheiten der Formel (I) aufweist bzw. aufweisen

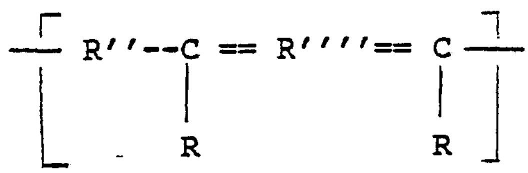

, (I)

sowie deren Salze, worin
R und $R''$ die oben angegebenen Bedeutungen besitzen und
$R''''$ gleiche oder verschiedene, gegebenenfalls durch gegebenenfalls substituierte Kohlenwasserstoffreste mit 1 bis 18 Kohlenstoffatomen substituierte monocyclische oder polycyclische Dihydro(hetero)-arendiylidenreste bedeuten.

Als Substituenten für die substituierten Dihydro(hetero)arendiylidenreste sind die für die substituierten (Hetero)arylenreste als bevorzugte Reste genannten bevorzugt.

Diese Polymere sind u. a. durch das o. g. Verfahren, wie es in der eingangs zitierten US-Patentschrift beschrieben ist, zugänglich.

Insbesondere besteht die Komponente a) ausschließlich aus den genannten Polymeren.

Besonders bevorzugt unter den erfindungsgemäßen Zusammensetzungen sind solche, welche als Komponente a) ein oder mehrere Polymere enthält, welche Einheiten der Formel (II) aufweist bzw. aufweisen,

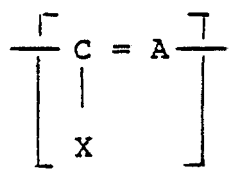

(II)

worin die Reste
C Kohlenstoffatome und die Reste
$\bar{A}$ gleiche oder verschiedene Reste der Formel (III) sind:

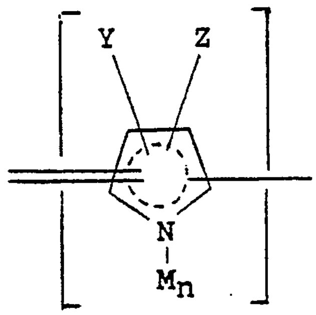

(III)

wobei in den obigen Formeln (II) und (III)

X, Y und Z unabhängig voneinander gleiche oder verschiedene einwertige Reste bedeuten, nämlich Wasserstoffatome, $C_1$-bis $C_{18}$-Alkylreste oder gegebenenfalls durch Halogen, Nitro-, $C_1$-bis $C_4$- Alkyl- und/oder Phenylreste substituierte Phenylreste und

Y und Z, welche, wie aus Formel (III) ersichtlich, jeweils an die nicht durch Gruppen der Formel C-X substituierten Kohlenstoffatome des Heterocyclus gebunden sind, zusätzlich zu den obengenannten Bedeutungen auch noch solche der Formel -COOR haben können, worin R für ein Wasserstoffatom, eine Phenyl- oder $C_1$- bis $C_{18}$-Alkylgruppe steht, und

X auch $-CR'_2Q$ bedeuten kann, wobei R′ und Q die beiden oben genannten Bedeutungen haben,

M steht jeweils für Wasserstoff, ein Metallatom, Metallion, einen Metallkomplex, eine Lewis-Säure, einen $C_1$-bis $C_{18}$-Alkylrest oder einen Phenylrest;

n steht für die Zahl 0 oder 1, mit der Maßgabe, daß wenn

n 0 bedeutet, die entsprechende Einheit der Formel (II) ungeladen ist und wenn

n 1 bedeutet, diese Einheit eine positive Ladung trägt,

und der gestrichelte Kreis innerhalb des Fünfrings in Formel (III) für zwei bindende Pi-Elektronenpaare im Heterocyclus steht.

Insbesondere besteht die Komponente a) ausschließlich aus solchen Polymeren.

Vorzugsweise ist R′ in den oben angegebenen Formeln jeweils ein Wasserstoffatom.

Die Herstellung von Polymeren der Formel (II) für die X die Bedeutung - $CR'_2Q$ hat, ist in der gleichzeitig mit dieser Anmeldung beim Deutschen Patentamt eingereichten Patentanmeldung beschrieben. Sie kann u. a. durch Umsetzung von entsprechenden Pyrrolen mit Glyoxal erfolgen.

Besonders bevorzugt sind jedoch Polymere der Formel (II), für die X nicht die Bedeutung - $CR'_2Q$ hat.

Beispiele für Reste X, Y und Z sind Wasserstoffatome; Alkylreste, wie Methyl-, Ethyl-, n-Propyl-, iso-Propyl-, n-, sec-und t-Butylreste, n-, sec-, t- und neo-Pentylreste, Hexylreste, wie der n-Hexylrest, Heptylreste, Oktylreste, wie der n-Oktyl- und der 2,2,4-Trimethylpentylrest, Nonylreste, wie der n-Nonylrest, Decylreste, wie der n-Decylrest, Undecyl-, Dodecyl-, Tridecyl-, Tetradecyl-, Pentadecyl-, Hexadecyl-, Heptadecyl- und Oktadecylreste; Phenylreste; substituierte Phenylreste, wie o-, m-, und p-Tolylreste, Xylylreste, Biphenylylreste, o-, m-, p-Chlorphenylreste, Nitrophenylreste und ähnliche mehr.

Weitere Beispiele für Reste Y und Z sind Reste der Formel -COOR, wobei Beispiele für Reste R Wasserstoffatome, Phenylreste und die als Beispiele für Alkylreste X, Y und Z genannten Reste.

Weitere Beispiele für X sind Reste der Formel - $CH_2Q$, worin Q Hydroxy-, Methoxy-, Ethoxy-, n-Propoxy-, iso-Propoxyreste, Chlor- oder Bromatome oder Acylreste wie der Acetylrest.

Beispiele für Reste M sind das Wasserstoffatom, Phenylreste, als Beispiele für Reste X, Y und Z genannte $C_1$- bis $C_{18}$- Alkylreste, Lewis-Säuren, wie $BF_3$, $AlCl_3$, $SnCl_4$, $BBr_3$, $BF_3$-Diethyletherat, $FeCl_3$, $ZnCl_2$, Eisen, Metallkationen der Übergangselemente und Komplexe von Metallen und Metallkationen der Übergangsmetalle mit bekannten Komplexbildnern. Beispiele für solche Metalle und Metallkationen sind Ti, Zr, V, Cr, Mo, W, Mn, Fe, Co, Ni, Cu, Zn, Ag, Au, Cd, Hg, Rh, Os, Ir, Pt und deren Kationen. Bekannte Komplexbildner sind Ethylendiamintetraessigsäure und deren Salze, Nitrilotriessigsäure und deren Salze, organische Amine, Cyanid, Ammoniak und weitere anorganische Anionen wie Chlorid und Sulfat.

Vorzugsweise sind die Reste

**X** Wasserstoffatome, $C_1$- bis $C_8$- Alkylreste oder Phenylreste;

**Y und Z** Wasserstoffatome, $C_1$- bis $C_8$ -Alkylreste, Phenylreste oder Reste der Formel -COOR, wobei R ein $C_1$- bis $C_8$-Alkylrest oder Phenylrest ist;

**M** Wasserstoffatome, $C_1$- bis $C_{10}$- Alkylreste, Phenylreste, Lewis-Säuren und anorganische Salze der Übergangsmetalle.

Insbesondere sind

**X** Wasserstoffatome, $C_1$-bis $C_4$-Alkylreste oder Phenylreste;

**Y und Z** Wasserstoffatome, $C_1$-bis $C_4$ Alkylreste oder Reste der Formel -COOR, wobei R ein $C_1$- bis $C_4$-Alkylrest ist;

**M** Wasserstoffatome, $C_1$- bis $C_{14}$- Alkylreste, Phenylreste, Lewis Säuren und anorganische Salze von Ti, V, Cr, Mn, Fe, Co, Ni, Cu und/oder Zn.

Falls in obiger Formel (III) n den Wert 1 hat, enthält das Polymer Gegenionen, um seine elektrische Neutralität zu wahren. Bei diesen Gegenionen handelt es sich um Anionen, beispielsweise anorganische Anionen, wie Fluorid, Chlorid, Bromid, Jodid, Sulfat, Hydrogensulfat, Phosphat, Hydrogenphosphat, Dihydrogenphosphat, Nitrat, Perchlorat und Tetrafluoroborat, organische Anionen wie Acetat, Trifluoracetat, Trichloracetat, Fluormethansulfonat, p-Toluolsulfonat, Trifluormethansulfonat und dergleichen mehr.

Beispiele für bevorzugte Polymere der Komponente b) sind einzelne der nachstehend genannten Polymeren und deren Copolymere, Pfropfcopolymere und Gemische:

Organische synthetische Polymere wie Polyvinylchlorid, Polyethylen, Polypropylen, Polyvinylacetat, Polycarbonat, Polyacrylat, Polymethacrylat, Polymethylmethacrylat, Polystyrol, Polyacrylnitril, Polyvinylidenchlorid, Polyvinylfluorid, Polyvinylidenfluorid, Polyvinylidencyanid, Polybutadien, Polyisopren, Polyether, Polyester, Polyamid, Polyimid, Silikone, Polyvinylalkohol, Polyvinylpyrrolidon, Polyacrylamid, Polyethylenglykol und deren Derivate und ähnliche einschließlich Copolymere wie Styrol-Acrylat Copolymere, Vinylacetat-Acrylat Copolymere und Ethylen-Vinylacetat Copolymere sowie natürliche Polymere wie Cellulose, Stärke, Casein und natürliches Gummi, sowie halbsynthetische hochmolekulare Verbindungen wie Cellulosederivate, z. B. Me thylcellulose, Hydroxymethylcellulose und Carboxymethylcellulose.

Die erfindungsgemäßen Zusammensetzungen werden vorzugsweise dadurch hergestellt, daß in Gegenwart einer Lösung oder in Lösungsmittel gequollenem Polymer der Komponente b) (vorzugsweise in diesem Lösungsmittel lösliche) niedermolekulare Ausgangsstoffe für die Komponente a), polymerisiert bzw. polykondensiert werden. Dementsprechend sind als Bestandteile der Komponente b) Polymere bevorzugt, welche sich in Lösungsmitteln quellen oder lösen lassen. Die oben als Beispiele für bevorzugte Polymere der Komponente b) genann-ten Stoffe und Gemische besitzen diese Eigenschaft.

Es soll also mindestens ein Bestandteil der Komponente b) vor der Polymerisation bzw. Polykondensation der Ausgangsstoffe für die Komponente a) als Polymer vorliegen. Dies schließt auch ein, daß dieses Polymer bzw. diese Polymere der Komponente b) in Gegenwart der Ausgangsstoffe für die Komponente a) hergestellt, also polymerisiert bzw. polykondensiert werden. In diesem Fall muß dies aber unter Bedingungen erfolgen, unter denen die Ausgangsstoffe der Komponente a) nicht oder nur in untergeordnetem Maßstab polymerisieren bzw. polykondensieren.

Sollen die erfindungsgemäßen Zusammensetzungen in Gegenwart von gequollenem Polymer der Komponente b) hergestellt werden, so ist denkbar und unter Umständen vorteilhaft, vorher mindestens einen, aber nicht alle der Ausgangsstoffe für die Komponente a) durch Zugabe zu mindestens einem der zu polymerisierenden oder zu polykondensierenden Ausgangsstoffe der Komponente b) zuzugeben und dann die Ausgangsstoffe der Komponente b) zu polymerisieren bzw. zu polykondensieren. Auf diese Weise wird eine gleichmäßige und feindisperse Verteilung von Komponente a) in Komponente b) erreicht.

Vorzugsweise enthalten die erfindungsgemäßen Zusammensetzungen die Komponente a) in mittleren Teilchengrößen von maximal 10 000 nm, insbesondere zwischen 1 nm und 1000 nm in einer kontinuierlichen Matrix von Polymer(en) der Komponente b).

Vorzugsweise werden als Ausgangsstoffe für die Komponente a) ein oder mehrere Verbindungen der Formel (IV) verwendet

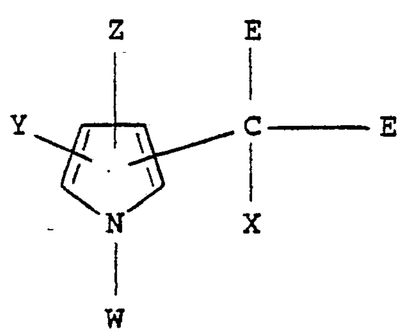

(IV)

worin X, Y und Z die oben angegebenen Bedeutungen haben und der Rest der Formel $-CXE_2$ in 2-, 3-, 4- oder 5-Position am Pyrrolring sitzt;

W ein Wasserstoffatom, einen $C_1$- bis $C_{18}$-Alkylrest oder einen Phenylrest bedeutet
$\overline{E}$ gleiche oder verschiedene einwertige Reste, nämlich Halogenatome, insbesondere Chlor- oder Bromatome, $C_1$- bis $C_6$-Alkoxyreste, $C_1$- bis $C_8$-Alkylsulfonat- oder Arylsulfonatreste bedeuten, oder zwei Reste $\overline{E}$ können auch ge meinsam für das Sauerstoffatom einer Carbonylgruuppe oder für einen Rest der Formel =N-G stehen, worin G ein Kohlenwasserstoffrest mit 1 bis 10 Kohlenstoffatomen bedeutet,wobei man gegebenenfalls in Gegenwart eines Kondensationsmittels umsetzt und, falls gewünscht, gegebenenfalls verwendetes flüchtiges Kondensationsmittel und Lösungsmittel vorzugsweise durch Verdampfen entfernt, und, falls das gewünschte Polymer Einheiten der Formel (III) enthalten soll, wobei n den Wert 1 besitzt und der gewünschte Rest M nicht schon durch das gegebenenfalls verwendete Kondensationsmittel eingeführt wurde, Reste von gegebenenfalls verwendetem Kondensationsmittel und dessen Reaktionsprodukten durch Behandeln mit einem polaren Lösungsmittel und gegebenenfalls einer Base entfernt, und das so erhaltene Polymer mit Brönstedt- oder Lewis-Säuren, Metallen, Metallionen, Metallkomplexen und/oder $C_1$- bis $C_{18}$-Alkylierungs- und/oder Phenylierungsmitteln umgesetzt.

Wird das erfindungsgemäße Verfahren in Gegenwart von gequollenem Polymer der Komponente b) durchgeführt, so kann Polymer der Komponente b) in verschiedensten Korngrößen eingesetzt werden. Einerseits ist es bevorzugt, mindestens ein Polymer der Komponente b), vorzugsweise alle, in Pulverform einzusetzen, also in Form von Teilchen mit einer Korngröße von maximal 1 mm. Dies gewährleistet eine gleichmäßige Verteilung der Komponente a) in der Komponente b). Andererseits ist es bevorzugt, Formteile der Komponente b) im erfindungsgemäßen Verfahren einzusetzen. Dies führt zu Beschichtungen von Polymer der Komponente a) auf dem Formteil der Komponente b). Falls die Komponente b) aus mehreren Polymeren besteht, kann auch mindestens eines dieser Polymeren als Formteil und mindestens eines als feinteiliges Polymer oder als Polymerlösung eingesetzt werden. Beispiele für Formteile sind Folien, Stränge, Profile, Granalien, Schaumkörper und Bänder.

Die Polykondensation wird vorzugsweise in Gegenwart eines Kondensationsmittels, beispielsweise aus der Gruppe der Säurechloride, Säureanhydride und starken Säuren und hygroskopischen Verbindungen durchgeführt. Beispiele für hygroskopische Verbindungen sind $CaCl_2$, KOH, $CuSO_4$, $Co(NO_3)_2$ und ähnliche mehr jeweils in getrockneter Form ohne Kristallwasser. Beispiele für solche Säurechloride sind $SOCl_2$, $POCl_3$, $PCl_5$ und p-Toluolsulfonsäurechlorid; Beispiele für solche Säureanhydride sind Acetanhydrid, Trifluormethansulfonsäureanhydrid, $P_4O_{10}$, $SO_3$ und Trifluoressigsäureanhydrid. Beispiele für solche starken Säuren sind p-Toluolsulfonsäure, Schwefelsäure, $C_1$- bis $C_8$-Alkyl- oder Arylsulfonsäuren, Fluorsulfonsäure und Chlorsulfonsäure. Vorzugsweise wird das Kondensationsmittel zusammen mit abgespaltenem Kondensat nach der Kondensation entfernt, insbesondere destillativ.

Falls im erfindungsgemäßen Verfahren Kondensationsmittel verwendet werden, so sind solche bevorzugt, die bei einer Temperatur von 80° C und einem Druck von 0,1 MPa gasförmig sind. Besonders bevorzugt ist es, Kondensationsmittel in Mengen von 0,5 Mol bis 2 Mol, insbesondere von 1 Mol bis 2 Mol pro Mol des am niedrigsten dosierten Ausgangsstoffes für die Komponente a), also insbesondere pro Mol von Verbindung(en) der Formel (IV) einzusetzen.

Das Verfahren zur Herstellung der erfindungsgemäßen Zusammensetzungen wird in Gegenwart von Lösungsmittel(n) durchgeführt. Unter Lösungsmittel wird hier jeder Stoff oder jedes Stoffgemisch flüssiger bis pastöser Konsistenz, das zumindest ein Polymer der Komponente b) löst oder quellen läßt, verstanden. Vorzugsweise hat das Lösungsmittel oder das Lösungsmittelgemisch einen Siedepunkt oder Siedebereich bis maximal 150° C. Es ist auch möglich, daß einer der Ausgangsstoffe für die Komponente a) (z. B. Benzol, Pyridin u. ä. m.) als Lösungsmittel dient.

Vorzugsweise wird das Lösungsmittel so gewählt, daß die niedermolekularen Ausgangsstoffe für die Komponente a), also insbesondere die entsprechende(n) Verbindung(en) der Formel (IV) darin löslich sind.

Im erfindungsgemäßen Verfahren wird Lösungsmittel vorzugsweise in Mengen von 1 Gewichtsteil bis 100 Gewichtsteilen, insbesondere von 10 Gewichtsteilen bis 50 Gewichtsteilen pro Gewichtsteil der Summe der Komponenten a) und b) eingesetzt.

Beispiele für Lösungsmittel sind Kohlenwasserstoffe, wie Alkane, beispielsweise Pentan, Benzin, Hexanisomeren, Heptanisomeren, Oktanisomeren; Benzol, Toluol und Xylole; chlorierte Kohlenwasserstoffe, wie Dichlormethan, Trichlormethan, Tetrachlormethan, Tetrachlorethylen, 1,2-Dichlorethan, 1,1,1-Trichlorethan; Alkohole, wie Methanol, Ethanol, n-Propanol, i-Propanol, Butanole, Pentanol; Ether, wie Diethylether, 1,4-Dioxan und Tetrahydrofuran; Ketone, wie Aceton, Methylethylketon und Methylisobutylketon; Carbonsäureester, wie Methylacetat und Ethylacetat; sonstige Lösungsmittel, wie Acetonitril, Dimethylsulfoxid, Schwefelkohlenstoff und Wasser.

Jede der vorgenannten und nachstehend erwähnten Komponenten kann einzeln oder im Gemisch eingesetzt werden. Es können also niedermolekulare Ausgangsstoffe für ein oder mehrere Polymere der Komponente a), es kann ein oder es können mehrere Polymere der Komponente b), es kann ein, es

können mehrere Kondensationsmittel, Lösungsmittel usw. eingesetzt werden. Die Reihenfolge der Zugabe dieser Komponenten ist, falls nicht ausdrücklich anders angegeben, beliebig.

Die Polykondensation zur Herstellung der erfindungsgemäßen Zusammensetzungen kann beim Druck der umgebenden Atmosphäre, also etwa 0,1 MPa (abs.), sie kann auch bei höheren oder bei niedrigeren Drücken durchgeführt werden. Drücke unter 0,1 MPa (abs.) können vorteilhaft sein, um die Diffusion von gasförmigem Kondensationsmittel in die Reaktionsmischung zu beschleunigen. Insbesondere sind Drücke von 0,09 MPa (abs.) bis 0,11 MPa (abs.) bevorzugt. Die Polykondensation wird vorzugsweise bei Temperaturen von 0° C bis 80° C, insbesondere von 15° C bis 50° C durchgeführt.

Die Polykondensation kann in Gegenwart von Sauerstoff durchgeführt, sie kann auch und wird vorzugsweise unter weitgehendem Ausschluß von Sauerstoff durchgeführt werden. Letzteres kann dadurch erreicht werden, daß man entweder unter Schutzgas, wie Stickstoff, Argon, Kohlendioxid und deren Gemischen, arbeitet oder/und in einer Atmosphäre eines gasförmigen Kondensationsmittels.

Nach der Polykondensation werden flüchtige Bestandteile der Reaktionsmischung vorzugsweise durch Destillation entfernt. Flüchtige Bestandteile sind insbesondere Lösungsmittel, und, falls verwendet, flüchtige Kondensationsmittel. Diese Destillation wird vorzugsweise bei Drücken unterhalb 1 hPa (abs.), insbesondere unterhalb 1 Pa (abs.) durchgeführt. Bei Drücken unter 1 Pa (abs.) wird vorzugsweise bei Temperaturen von höchstens 150° C destilliert.

Falls als Produkt des erfindungsgemäßen Verfahrens eine Zusammensetzung hergestellt werden soll, welche als (Bestandteil der) Komponente a) ein Polymer enthalten soll, das Einheiten der Formel (III) enthält, wobei n den Wert 1 besitzt, kann man von einer Verbindung der Formel (IV) ausge hen, in der W ein Wasserstoffatom bedeutet und das entsprechend dargestellte Polymer wie nachstehend geschildert nachbehandeln. Diese Nachbehandlung ist nicht notwendig, falls der Rest W in Formel (IV) dem Rest $M_n$ in Formel (III) entspricht, sollen beispielsweise Polymere der Formel (II) mit n = 1 und M = Wasserstoff, $C_1$- bis $C_{18}$- Alkyl oder Phenyl hergestellt werden, so wird direkt von Verbindungen der Formel (IV) ausgegangen, in denen der Rest W dem gewünschten Rest M entspricht.

Die Nachbehandlung erfolgt durch Entfernung von Resten von Kondensationsmittel und dessen Reaktionsprodukten, falls Kondensationsmittel verwendet wurde, und Quarternisierung des Stickstoffatoms des Heterocyclus. Reste von Kondensationsmittel und dessen Reaktionsprodukte, die nach der oben erwähnten Destillation noch zugegen sind, können entfernt werden, indem man die Zusammensetzung mit einem polaren Lösungsmittel, in dem die Zusammensetzung unlöslich ist, und insbesondere einer Base behandelt. Als polares Lösungsmittel ist Wasser bevorzugt. Schon relativ schwache Basen, wie Ammoniak, primäre, sekundäre und tertiäre organische Amine, Carbonat und dergleichen unterstützen das Auswaschen von Kondensationsmitteln und deren Reaktionsprodukte erheblich, was sich anhand von Elementaranalysen der Polymere vor und nach der Behandlung überprüfen läßt. Alternativ ist die Behandlung mit gasförmigen Basen, wie Ammoniak, Methylamin und Dimethylamin und anschließendes Waschen mit Lösungsmittel der o. g. Art möglich. Anschließend wird das Stickstoffatom quarternisiert, um den Rest M gemäß Formel (III) einzuführen. Dies gelingt durch Umsetzung der Zusammensetzung mit Brönstedt- oder Lewis-Säuren, Metallen, Metallionen, Metallkomplexen und/oder $C_1$- bis $C_{18}$-Alkylierungs- und/oder Phenylierungsmitteln. Beispiele für Brönstedt-Säuren sind HCl, $H_2SO_4$, $HClO_4$, $ClSO_3H$, HBr, $H_2F_2$, HJ, $H_3PO_4$, $HNO_3$,$F_3CCOOH$ und dergleichen mehr, deren saure Salze, deren saure Kondensate, wie Pyrophosphorsäure, Tetrafluorborsäure, Trichloressigsäure, p-Toluolsulfonsäure, Trifluormethansulfonsäure etc. Beispiele für Lewis-Säuren, Metalle, Metallionen und Metallkomplexe sind die bereits als Beispiele für M genannten Atome, Ionen und Moleküle. Beispiele für Alkylierungsmittel sind Methyljodid, Dimethylsulfat, Trifluormethansulfonsäuremethylester, Diethylsulfat und die übrigen Jodide, Bromide, Chloride und Schwefelsäureester der als Beispiele für X, Y und Z oben aufgeführten $C_1$- bis $C_{18}$- Alkylreste.

Die Menge an Mitteln zur Quarternisierung der Stickstoffatome im Heterocyclus (im folgenden "Quarternisierungsmittel" genannt), falls verwendet, hängt davon ab, welchen Anteil der im Polymer enthaltenen, im Heterocyclus gebundenen Stickstoffatome quarternisiert werden sollen.

Die oben geschilderten Zusammensetzungen können, sofern dies gewünscht wird, zusätzlich elektrochemisch und/oder durch Dotierungsmittel dotiert werden. Je nach Wahl der Dotierungsmittel lassen sich die Leitfähigkeiten der erfindungsgemäßen Zusammensetzungen in weiten Grenzen variieren. Beispiele für Dotierungsmittel sind Alkalimetalle, wie Natrium oder Kalium; Protonensäuren wie $H_2SO_4$, $HClO_4$, $H_2Cr_2O_7$, HJ und $HNO_3$; Lewis-Säuren wie $SbCl_5$, $AsCl_5$, $TiCl_4$, $FeCl_3$, $SnCl_4$, $ZnCl_2$, $AsF_5$ und Halogen, wie z.B. Jod. Die Behandlung der erfindungsgemäßen Zusammensetzungen mit Dotierungsmittel (n) wird im allgemeinen so durchgeführt, daß man die Dämpfe oder Lösungen des Dotierungsmittels auf die Polymeren einwirken läßt. Meist arbeitet man bei etwa 10 bis 30° C, meist unter Feuchtigkeitsausschluß, oft unter Luftausschluß. Die dotierten Polymere enthalten vorzugsweise von 0 bis 50, besonders vorzugsweise von 0,01 bis 30, insbesondere von 0,1 bis 20 Gew.-% Dotierungsmittel.

Die erfindungsgemäßen Zusammensetzungen können weitere Stoffe enthalten, welche üblicherweise in Polymeren eingesetzt werden. Es sind dies verstärkende und nicht verstärkende Füllstoffe, Weichmacher, Strukturhilfsmittel, UV-Stabilisatoren, Pigmente und Farbstoffe und ähnliche mehr.

Sie können als Pulver, Beschichtungsmassen, Folien und andere Formteile eingesetzt werden.

Werden die erfindungsgemäßen Zusammensetzungen, wie bevorzugt, in Gegenwart von gequollenem oder gelöstem Polymer der Komponente b) hergestellt, so zeigen sie makroskopisch eine homogene Verteilung der Komponenten a) und b). Sie äußert sich in einer gleichmäßigen dunkelbraunen bis tiefschwarzen Färbung mit grünlich glänzender Oberfläche. Ursache hierfür ist eine mikroskopisch feindispergierte Komponente a). Elektronenmikroskopische Aufnahmen eines nach Beispiel 1 hergestellten Polymers dokumentieren beispielsweise eine statistisch homogene Verteilung diskreter schwarzer Polypyrrylenmethinpartikel in der gesamten Matrix. Die beobachteten Partikelgrößen streuen zwischen 5 und 200 nm. Anhand der relativ unscharfen Phasengrenzen läßt sich schließen, daß die Polypyrrylenmethinkomponente nicht als kompakter und inerter Füllstoff vorliegt, sondern daß sich beide Komponenten im Bereich der Phasengrenze gegenseitig durchdringen und somit mechanisch ankoppeln.

Die erfindungsgemäßen Polymere sind je nach Art und Umfang ihrer Dotierung und Quarternisierung elektrisch leitende oder halbleitende Verbindungen. Sie können als elektrische Leiter und Halbleiter, als elektrochemische Sensoren und/oder als Materialien für elektrische Abschirmungen verwendet werden. Sie können beispielsweise in Batterien, Schaltungen, Schaltern, gegebenenfalls vermischt mit anderen Polymeren, eingesetzt werden. Die Verwendung als elektrochemische Sensoren beruht auf der Änderung der elektrischen Eigenschaften der erfindungsgemäßen Zusammensetzungen nach Behandlung mit Säure oder Base.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 20° C und

d) alle Lösungsmittelmengen so bemessen, daß sich 25 ml Lösung ergeben.

Beispiel 1:

1.77 g Polyvinylchlorid mit einem Polymerisationsgrad von 1680 und einer Leitfähigkeit von $4 \cdot 10^{-11}$ S/cm und 762 mg Pyrrol-2-carbaldehyd wurden mit trockenem Tetrahydrofuran auf 25 ml Lösung aufgefüllt. Mit dieser Mischung wurde auf einer 28 µm dicken Polyesterunterlage ein Film mit einem 500 µm starken Rakel gezogen, so daß dieser nach dem Trocknen 1,7 Stunden bei 20° C noch 60 µm dick, farblos und lichtdurchlässig war. Der Film wurde von der Polyesterunterlage abgezogen und ein Probekörper von 61 mg Gewicht auf einen Glasobjektträger aufgelegt.

In eine Petrischale mit einem plan geschliffenen oberen Rand, Durchmesser 9 cm und Höhe 2 cm wurden 5 ml Phosphoroxidchlorid eingebracht. In die Petrischale, die auf 50° C mit Hilfe einer temperierbaren Glasplatte aufgeheizt wurde, wurde ein quadratisch gebogener Glasstab mit 0,4 cm Durch messer als Abstandhalter eingelegt und darauf der Objektträger mit der PVC-Folie. Nach 1 Stunde Reaktionszeit wurde die Folie 6 Stunden bei 0,05 Pa und 80° C getrocknet.

Die so erhaltene schwarze, flexible Folie wog 126,3 mg und hatte eine Leitfähigkeit von $7{,}3 \cdot 10^{-2}$ S/cm (ermittelt durch Vierpunktmessung an der Luft). Nach 25 Tagen Lagerung an der Luft war keine signifikante Änderung der Leitfähigkeit zu ermitteln. Elektronenmikroskopische Aufnahmen zeigen fein verteilte Teilchen von 20 nm Durchmesser in einer kontinuierlichen Matrix.

Beispiel 2:

Eine Lösung von Polyvinylchlorid und Pyrrol-2-carbaldehyd in Tetrahydrofuran wurde hergestellt wie in Beispiel 1 beschrieben. Mit dieser Mischung wurde auf einer Glasplatte ein Film mit einem 500 µm starken Rakel gezogen, so daß dieser nach dem Trocknen für 4 1/2 Stunden bei 20° C noch 30 µm dick, farblos und lichtdurchlässig war.

Der Film wurde von der Glasunterlage abgezogen und ein Probekörper von 18,8 mg Gewicht auf einen Glasobjektträger aufgebracht. Dieser wurde in eine Petrischale mit einem plan geschliffenen oberen Rand, Durchmesser 9 cm und Höhe 2 cm auf einen quadratisch gebogenen Glasstab mit 0,4 cm Durchmesser als Abstandhalter eingelegt. Am Boden der Petrischale befanden sich 10 ml Tetrahydrofuran. Nachdem die Folie für 40 Minuten bei 20° C gequollen war, wurde der Objektträger mit der Folie aus dem Gefäß

herausgenommen und auf ein aus einem 0,2 cm starken Glasstab geformtes Quadrat, das als Abstandhalter fungierte, gelegt und in ein durch einen flüssigkeitsdurchspülenden Außenmantel auf 50° C temperiertes Gefäß von 6 cm Innendurchmesser und 14 cm Höhe, das mit Gasein- und -ableitung versehen war, eingebracht. Nach dem Spülen des Gefäßes für 10 Minuten mit Inertgas (Argon) wurde auf 50° C erwärmter Phosphoroxidchloriddampf durch Durchleiten eines Argonstroms durch eine mit flüssigem Phosphoroxidchlorid gefüllte und erwärmte Gaswaschflasche in das Gefäß eingeleitet. Nach 20 Minuten Reaktionszeit wurde die Folie 6 Stunden bei 0,05 Pa und 80° C getrocknet. Die so erhaltene schwarze, flexible Folie wog 43,6 mg und hatte eine Leitfähigkeit von 1,0 . $10^{-2}$ S/cm (ermittelt durch Vierpunktmessung an der Luft).

Beispiel 3:

Die Herstellung der Folie erfolgte wie in Beispiel 2 beschrieben. Auf der 3 Stunden bei 20° C getrockneten Folie wurde ein Probekörper von 18,6 mg Gewicht in das in Beispiel 2 beschriebene temperierbare Gefäß gelegt und bei 40° C für 60 Minuten mit Phosphoroxidchlorid bedampft. Danach wurde die Folie 5 Stunden bei 0,05 Pa und 80° C getrocknet. Die so erhaltene schwarze, flexible Folie wog 19,3 mg und hatte eine Leitfähigkeit von 1,2 . $10^{-3}$ S/cm (ermittelt durch Vierpunktmessung an der Luft).

Beispiel 4:

Die Herstellung der Ausgangsfolie erfolgte wie in Beispiel 2 beschrieben. Die Polykondensationsreaktion wurde wie in Beispiel 1 beschrieben durchgeführt, unterschiedlich waren die Reaktionszeiten. Die Trocknung der Folien erfolgte bei 80° C und 0,05 Pa für 4 Stunden.
Die so erhaltenen dunkelbraunen bis schwarzen flexiblen Folien zeigten folgende Leitfähigkeiten:
Reaktionszeit 0.75 Minuten: $\sigma = 1.7 * 10^{-9}$ S/cm
Reaktionszeit 1.0 Minuten: $\sigma = 8.8 * 10^{-8}$ S/cm
Reaktionszeit 3.0 Minuten: $\sigma = 3.9 * 10^{-7}$ S/cm
Reaktionszeit 5.0 Minuten: $\sigma = 1.8 * 10^{-3}$ S/cm
Reaktionszeit 10.0 Minuten: $\sigma = 2.9 * 10^{-3}$ S/cm

Beispiel 5:

Die Herstellung der Folien erfolgte wie in Beispiel 2 beschrieben, mit der Ausnahme, daß die Zusammensetzung der Ausgangslösungen in Gewichtsprozent Pyrrol-2-carbaldehyd bezogen auf eingesetztes PVC in der Ausgangslösung 2,1, 6,5, 11,2, 26,1 und 44,4 % betrug. Die Durchführung der Reaktion entsprach der in Beispiel 3 beschriebenen Methode, die Reaktionszeit betrug in allen Fällen 5 Stunden. Die so erhaltenen schwarzen, flexiblen Folien zeigten folgende Leitfähigkeiten

| Gew. % Pyrrolaldehyd | Leitfähigkeit $\delta$ [S/cm] |
|---|---|
| 2,1 | $4,9 * 10^{-5}$ |
| 6,5 | $6,6 * 10^{-5}$ |
| 11,2 | $7,0 * 10^{-5}$ |
| 26,1 | ... |
| 44,4 | $2,5 * 10^{-3}$ |

Beispiel 6:

Die Filmherstellung erfolgte wie in Beispiel 2, der Gewichtsanteil an Pyrrol-2-carbaldehyd in der Ausgangslösung betrug 42,5 Gew.% bezogen auf das Matrixpolymer. Nach dem Trocknen für 30 Stunden bei 20° C wurde ein Probestück von 1,5 * 20,0 cm des 30 µm dicken Films auf einen Objektträger in das in

Beispiel 2 beschriebene Gerät eingebracht. Nach dem Spülen für 10 Minuten mit Argon wurde für 20 Minuten auf 30° C erwärmtes Chlorwasserstoffgas eingeleitet. Die Folie wurde danach bei 80° C und 0,05 Pa für 5 Stunden getrocknet. Die so erhaltene schwarze flexible Folie zeigte eine Leitfähigkeit von 6,3 * $10^{-8}$ S/cm (ermittelt durch Vierpunktmessung an der Luft).

Beispiel 7:

Die Folienherstellung erfolgte wie in Beispiel 1, es wurde aber N-Butylpyrrol-2-carbaldehyd anstatt Pyrrol-2-carbaldehyd verwendet. Der Gehalt an N-Butylpyrrolaldehyd in der Ausgangslösung betrug 49,1 % bezüglich Matrixpolymeranteil. Die Polykondensation wurde durch Einbringen eines Probekörpers in Phosphoroxidchloriddampf unter Luftzutritt bei 50° C durchgeführt wie in Beispiel 1 beschrieben. Die Reaktionszeit betrug 3 Stunden, danach wurde die Folie für 6 Stunden bei 2 Pa und 75° C getrocknet. Die Folie besaß eine Leitfähigkeit von 2,1 * $10^{-3}$ S/cm (ermittelt durch Vierpunktmessung an der Luft).

Beispiel 8:

Die Folienherstellung erfolgte wie in Beispiel 1, es wurde aber N-Phenylpyrrol-carbaldehyd anstatt Pyrrol-2-carbaldehyd verwendet. Der Gehalt an N-Phenylpyrrolaldehyd in der Ausgangslösung betrug 44,2 % bezüglich PVC-Anteil. Die Polykondensation erfolgte wie in Beispiel 7 beschrieben, allerdings betrug die Reaktionszeit 30 Minuten. Anschließend wurde die Folie 5,5 Stunden bei 2 Pa und 75° C getrocknet. Die Folie besaß eine Leitfähigkeit von 2,5 * $10^{-3}$ S/cm (ermittelt durch Vierpunktmessung an der Luft).

Beispiel 9:

Die Folienherstellung erfolgte wie in Beispiel 1, es wurde aber 3,4-Diethylpyrrol-2-carbaldehyd anstatt Pyrrol-2-carbaldehyd verwendet. Der Gehalt an 3,4-Diethylpyrrol-2-carbaldehyd in der Ausgangslösung betrug 42,8 % bezüglich PVC-Anteil. Die Polykondensation erfolgte wie in Beispiel 3 beschrieben mit der Ausnahme, daß die Reaktionstemperatur 50° C und die Reaktionszeit 100 Minuten betrug. Die Leitfähigkeit der schwarzen, flexiblen Folie betrug 9,5 * $10^{-5}$ S/cm (ermittelt durch Vierpunktmessung an der Luft).

Beispiel 10:

Eine nach Beispiel 1 hergestellte Polymerfolie mit der Leitfähigkeit 7,3 * $10^{-2}$ S/cm wurde für 4 Tage in 15 %iger wäßriger Ammoniaklösung unter Luftausschuß gelagert. Nach dem Trocknen für 5 Stunden und 80° C bei 2 Pa wurde die Leitfähigkeit der Folie mit 3,2 * $10^{-5}$ S/cm bestimmt (ermittelt durch Vierpunktmessung an der Luft).

Beispiel 11:

Eine nach Beispiel 2 hergestellte Polymerfolie mit der Leitfähigkeit 1,16 * $10^{-3}$ S/cm wurde in einem Schlenkkolben, der mit Chlorwasserstoffgas gefüllt war, für 24 Stunden gelagert. Die Leitfähigkeit der Folie betrug nach dieser Behandlung 4,0 * $10^{-4}$ S/cm (ermittelt durch Vierpunktmessung an der Luft).

Beispiel 12:

6,03 mg einer Polymerfolie, die nach Beispiel 6 hergestellt wurde und eine Leitfähigkeit von 6,3 * $10^{-8}$ S/cm aufwies, wurde zusammen mit 21,3 mg Jod unter Argon in einen Schlenkkolben eingewogen und in flüssigem Stickstoff eingefroren. Der Kolben wurde auf 2 Pa evakuiert und anschließend für 3 Stunden bei 100° C gelagert. Die Leitfähigkeit der Folie betrug 6,4 * $10^{-5}$ S/cm (ermittelt durch Vierpunktmessung an der Luft).

Beispiel 13:

Eine Mischung aus 5,0 ml der im Beispiel 1 beschriebenen Lösung bestehend aus PVC und Pyrrol-2-carbaldehyd wurde unter Argon auf -70° C abgekühlt. Unter Rühren wurde mit Hilfe einer gasdichten Spritze 200 µl Phosphoroxidchlorid zugesetzt. Nachdem sich das zugesetzte Kondensationsmittel gelöst hatte, wurden 2 ml der klaren farblosen Lösung in einer auf 75° C geheizten Petrischale mit Durchmesser 9 cm und Höhe 2 cm gegeben. Nach 10 Minuten wurde der tiefschwarze Film für 5,5 Stunden bei 0,02 Pa und 100° C getrocknet. Die Leitfähigkeit der so erhaltenen flexiblen Folie betrug $3 * 10^{-4}$ S/cm (ermittelt durch Vierpunktmessung an der Luft). Elektronenmikroskopische Untersuchungen ergaben eine bimodale Verteilung von Polymer a) im PVC mit mittleren Durchmessern von 100 nm und 1000 nm.

Beispiel 14:

Zu 10 g einer 20%-igen wäßrigen Lösung von Polyvinylalkohol (Polymerisationsgrad 450) in Wasser wurden 1.0 g (0.011 Mol) Pyrrol-2-carbaldehyd zugesetzt und gelöst. Anschließend wurden 2.0 g (0.011 Mol) p-Toluolsulfonsäurehydrat zugesetzt. Nachdem sich die Säure vollständig gelöst hatte, wurde mit einem 500 µm starken Rakel ein Film auf einer Glasplatte gezogen. Der Film wurde anschließend für 45 Minuten bei 20° C getrocknet.

Ein Probekörper, der bei 50° C für 12 Stunden an der Luft gelagert wurde, hatte eine Leitfähigkeit von $1.9*10^{-6}$ S/cm (ermittelt durch Vierpunktmessung an der Luft). Die Leitfähigkeit von reinem PVA dagegen betrug $6.0*10^{-12}$ S/cm. Elektronenmikroskopische Untersuchungen ergaben eine bimodale Verteilung (80 nm und 600 nm als mittlere Teilchendurchmesser) der Komponente a) im Polyvinylalkohol.

Beispiel 15:

4.4 g Polystyrol mit einer Leitfähigkeit von $6*10^{-11}$ S/cm und 1.3 g Pyrrol-2-carbaldehyd wurden mit Tetrahydrofuran auf 25 ml Lösung aufgefüllt. Mit dieser Mischung wurde auf einer Glasplatte mit einem 500 µm starken Rakel ein Film gezogen.

Nach 2-stündigem Trocknen des Films bei 20° C an der Luft wurde ein Probekörper von 45.8 mg Gewicht analog der in Beispiel 3 beschriebenen Methode bei 50° C für 15 Minuten einer Phosphoroxidchloridatmosphäre ausgesetzt.

Nach dem Trocknen für 5 Stunden bei 0,02 Pa und 100° C wog die Folie 60.4 mg und hatte eine Leitfähigkeit von $1.7*10^{-4}$ S/cm. Elektronenmikroskopische Aufnahmen zeigten eine feine Verteilung von Partikeln der Komponente a) mit einem mittleren Durchmesser von 40 nm im Polystyrol.

Beispiel 16:

Ein Probekörper Filterpapier von 4,0 cm Länge und 1,5 cm Breite wurde in eine 10 %ige Lösung von Pyrrol-2-carbaldehyd in Tetrahydrofuran getränkt. Nach dem Trocknen für 10 Minuten bei 20° C wurde der Probekörper in die in Beispiel 3 beschriebene, auf 50° C erwärmte Apparatur gebracht und für 5 Minuten einer Phosphoroxidchloridatmosphäre ausgesetzt. Nach dem Trocknen für 6 Stunden bei 0,02 Pa und 100° C hatte das gleichmäßig schwarze Papier eine Leitfähigkeit von $9,7*10^{-5}$ S/cm.

Beispiel 17:

In einem Becherglas wurden bei Raumtemperatur in 25 g einer Polyetherpolyolformulierung (Oldofill 1600-00, Büsing & Fasch GmbH & Co, D-7030 Böblingen) und 6 ml Tetrahydrofuran 12,5 g Pyrrol-2-carbaldehyd gelöst. Anschließend wurden 25 g flüssiges 4,4′-Diphenyl-methan-diisocyanat (Oldopur 1000, Büsing & Fasch GmbH) zugesetzt und sofort mit einem mechanischen Rührer mit 2000 Umdrehungen pro Minute homogenisiert. Zum Ausschäumen wurde die Mischung anschließend in eine Papiertüte eingegossen.

Nach 12 Stunden Stehenlassen bei Raumtemperatur wurden Probekörper von 2,5 x 2,5 x 1,5 cm ausgeschnitten und in der in Beispiel 2 beschriebenen Begasungsapparatur begast. Bei Kontakt mit Phosphoroxidchloriddämpfen bei 50° C verfärbten sich die Probekörper innerhalb von 2 Minuten von

ockerfarben nach schwarz, der Hartschaum behielt dabei seine mechanischen Eigenschaften bei. Begasung mit Chlorwasserstoffgas bei 50° C führte innerhalb von zwei Minuten zu einer Schwarzgrünfärbung. Blindproben mit Hartschaum ohne Pyrrol-2-carbaldehyd-Zusatz ergaben unter gleichen Bedingungen keine Farbänderung.

Beispiel 18:

5,0 g einer 50 %igen Polybutylacrylatlösung in t.-Butylmethylether wurden in einer Lösung von 0,75 g Pyrrol-2-carbaldehyd in 15 ml Tetrahydrofuran vollständig gelöst. Anschließend wurde die Mischung auf -15° C abgekühlt und bei dieser Temperatur 0,46 ml Phosphoroxidchlorid zugegeben. Schließlich wurden auf einen Glasobjektträger zwei Tropfen der farblosen und klaren Mischung aufgebracht und bei Raumtemperatur gelagert. Nach 15 Minuten war das Polymer schwarz gefärbt. Anschließend wurde für 6 Stunden bei 0,02 Pa und 80° C getrocknet. Die Leitfähigkeit des schwarzen elastischen Materials betrug $2 \cdot 10^{-4}$ S/cm im Vergleich zu einer Leitfähigkeit von $\leq 10^{-12}$ S/cm des reinen Matrixpolymers.

Beispiel 19:

5,0 g eines Polyethylenoxids (Polyglykol Hoechst 20000, Hoechst AG, D-6230 Frankfurt) mit einer Leitfähigkeit von $\leq 10^{-12}$ S/cm und 1,5 g Pyrrol-2-carbaldehyd wurden in 25 ml destilliertem Wasser gelöst. Mit dieser Mischung wurde ein Glasobjektträger beschichtet. Nach 18 Stunden Trocknungszeit an der Luft bei Raumtemperatur wurde der milchig-weiß beschichtete Glasobjektträger, wie in Beispiel 1 beschrieben, mit Phosphoroxidchloriddämpfen bei 50° C behandelt. Nach 15 Minuten war der Film gleichmäßig schwarz gefärbt. Anschließend wurde für 6 Stunden bei 0,02 Pa und 80° C getrocknet. Die Leitfähigkeit betrug $2{,}3 \cdot 10^{-4}$ S/cm.

Beispiel 20:

Zu 13 g eines Silikonpolymers (FD 20/2549 HL, Wacker-Chemie GmbH, D-8000 München) wurden 3,9 g Pyrrolaldehyd, 9 ml Toluol und 0,5 g eines Vernetzers (Ma 11/1662 IL) zugegeben. Nachdem die Komponenten vollständig homogenisiert waren, wurde ein Glasobjektträger mit der leicht hellgelb gefärbten Mischung beschichtet. Der Silikonkautschuk wurde über 24 Stunden bei Raumtemperatur vernetzt, anschließend wurde, wie in Beispiel 1 beschrieben, bei 50° C mit Phosphoroxidchlorid begast. Die Kautschukmasse verfärbte sich dabei innerhalb von 5 Minuten durchgehend schwarz. Das Produkt wurde für 6 Stunden bei 0,02 Pa und 80° C getrocknet. Die Leitfähigkeit betrug $1{,}5 \cdot 10^{-9}$ S/cm im Vergleich zum Matrixpolymeren, das die Leitfähigkeit von $< 10^{-12}$ S/cm hatte.

## Ansprüche

1. Zusammensetzung enthaltend
a) Polyarylenmethine, Polyheteroarylenmethine und/oder deren Salze, dadurch gekennzeichnet, daß sie zusätzlich
b) mindestens ein weiteres Polymer enthält.

2. Zusammensetzung gemäß Anspruch 1, wobei die Komponente b) mindestens einen Thermoplasten enthält.

3. Zusammensetzung gemäß Anspruch 1 oder 2, welche pro Gewichtsteil Komponente a) mindestens 0,1 Gewichtsteile Komponente b) enthält.

4. Zusammensetzung gemäß Anspruch 3, welche pro Gewichtsteil Komponente a) 1 bis 100 Gewichtsteile Komponente b) enthält.

5. Zusammensetzung gemäß einem der Ansprüche 1, 2, 3 oder 4, welche als Komponente a) ein oder mehrere Polymere enthält, welche Einheiten der Formel (I) aufweist bzw. aufweisen.

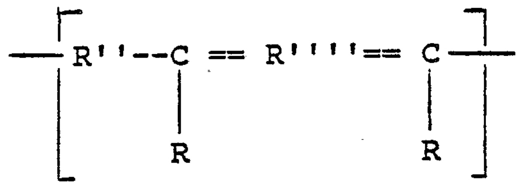

(I)

sowie deren Salze, worin
R gleiche oder verschiedene Alkylreste mit 1 bis 8 Kohlenstoffatomen, Phenylreste oder Wasserstoffatome oder Reste der Formel - $CR'_2$-Q, wobei
Q gleiche oder verschiedene Hydroxyl-, $C_1$- bis $C_{18}$-Alkoxy-, $C_1$- bis $C_{18}$-Alkylsulfonat-, $C_1$- bis $C_{18}$-Arylsulfonat-, Trifluoracetyl-, $C_1$- bis $C_{18}$-Acyl-, gegebenenfalls substituierte Phenolatreste oder Chlor- oder Bromatome;
$R''$ gleiche oder verschiedene, gegebenenfalls durch gegebenenfalls substituierte Kohlenwasserstoffreste mit 1 - 18 Kohlenstoffatomen substituierte monocyclische oder polycyclische (Hetero-)Arylenreste;
$R''''$ gleiche oder verschiedene, gegebenfalls durch gegebenenfalls substituierte Kohlenwasserstoffreste mit 1 bis 18 Kohlenstoffatomen, substituierte monocyclische oder polycyclische Dihydro(hetero)-arendiylidenreste und
$R'$ gleiche oder verschiedene Wasserstoff- oder Halogenatome bedeuten.

6. Zusammensetzung gemäß Anspruch 5, welche als Komponente a) ein oder mehrere Polymere enthält, welche Einheiten der Formel (II) aufweist bzw. aufweisen,

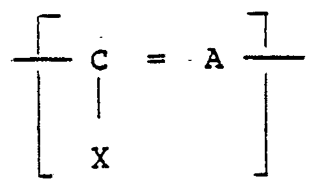

(II)

worin die Reste
C Kohlenstoffatome und die Reste
A gleiche oder verschiedene Reste der Formel (III) sind:

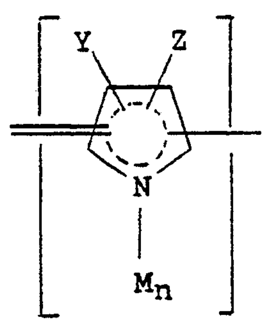

(III)

wobei in den obigen Formeln (II) und (III)
X, Y und Z unabhängig voneinander gleiche oder verschiedene einwertige Reste bedeuten, nämlich Wasserstoffatome, $C_1$-bis $C_{18}$-Alkylreste oder gegebenenfalls durch Halogen, Nitro-, $C_1$-bis $C_4$- Alkyl- und/oder Phenylreste substituierte Phenylreste und
Y und Z, welche, wie aus Formel (II) ersichtlich, jeweils an die nicht durch Gruppen der Formel C-X substituierten Kohlenstoffatome des Heterocyclus gebunden sind, zusätzlich zu den obengenannten Bedeutungen auch noch solche der Formel -COOR haben können, worin R für ein Wasserstoffatom, eine Phenyl- oder $C_1$- bis $C_{18}$-Alkylgruppe steht, und
X auch -$CR'_2$Q bedeuten kann, wobei $R'$ und Q die beiden oben genannten Bedeutungen haben,
M steht jeweils für Wasserstoff, ein Metallatom, Metallion, einen Metallkomplex, eine Lewis-Säure, einen $C_1$- bis $C_{18}$- Alkylrest oder einen Phenylrest;
n steht für die Zahl 0 oder 1, mit der Maßgabe, daß wenn n 0 bedeutet, die entsprechende Einheit der

Formel (II) ungeladen ist und wenn
n 1 bedeutet, diese Einheit eine positive Ladung trägt,
und der gestrichelte Kreis innerhalb des Fünfrings in Formel (III) für zwei bindende Pi-Elektronenpaare im Heterocyclus steht.

7. Zusammensetzung nach einem der Ansprüche 1, 2, 3, 4, 5 oder 6, wobei die Komponente a) in mittleren Teilchengrößen von maximal 10 000 nm, insbesondere zwischen 1 nm und 1000 nm in einer kontinuierlichen Matrix von Polymer(en) der Komponente b) vorliegt.

8. Verfahren zur Herstellung von Zusammensetzungen gemäß einem der Ansprüche 1 bis 7, wobei in Gegenwart einer Lösung von Polymer und/oder von in Lösungsmittel gequollenem Polymer der Komponente b) vorzugsweise in diesem Lösungsmittel lösliche niedermolekulare Ausgangsstoffe für die Komponente a), polymerisiert bzw. polykondensiert werden.

9. Verfahren gemäß Anspruch 8 zur Herstellung von Zusammensetzung gemäß Anspruch 6 oder 7, wobei man als Ausgangsstoffe für die Komponente a) ein oder mehrere Verbindungen der Formel (IV) einsetzt

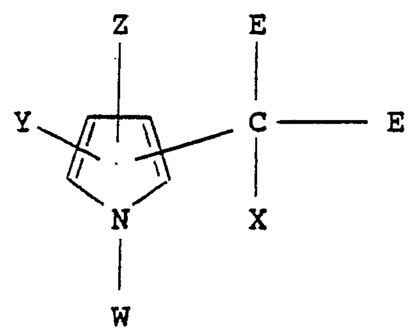

(IV)

worin X, Y und Z die in Anspruch 6 angegebenen Bedeutungen haben und der Rest der Formel $-CXE_2$ in 2-, 3-, 4-oder 5-Position am Pyrrolring sitzt;
W ein Wasserstoffatom, einen $C_1$- bis $C_{18}$-Alkylrest oder einen Phenylrest bedeutet
E gleiche oder verschiedene einwertige Reste, nämlich Halogenatome, insbesondere Chlor- oder Bromatome, $C_1$- bis $C_6$-Alkoxyreste, $C_1$- bis $C_8$-Alkylsulfonat- oder Arylsulfonatreste bedeuten, oder zwei Reste E können auch gemeinsam für das Sauerstoffatom einer Carbonylgruppe oder für einen Rest der Formel =N-G stehen, worin G ein Kohlenwasserstoffrest mit 1 bis 10 Kohlenstoffatomen bedeutet;
wobei man gegebenenfalls ins Gegenwart eines Kondensationsmittels umsetzt und, falls gewünscht, gegebenenfalls verwendetes flüchtiges Kondensationsmittel und Lösungsmittel vorzugsweise durch Verdampfen entfernt, und, falls das gewünschte Polymer Einheiten der Formel (III) enthalten soll, wobei n den Wert 1 besitzt und der gewünschte Rest M nicht schon durch das gegebenenfalls verwendete Kondensationsmittel eingeführt wurde, Reste von gegebenenfalls verwendetem Kondensationsmittel und dessen Reaktionsprodukten durch Behandeln mit einem polaren Lösungsmittel und gegebenenfalls einer Base entfernt, und das so erhaltene Polymer mit Brönstedt- oder Lewis-Säuren, Metallen, Metallionen, Metallkomplexen und/oder $C_1$- bis $C_{18}$-Alkylierungs- und/oder Phenylierungsmitteln umgesetzt.

10. Verwendung der Zusammensetzungen gemäß einem der Ansprüche 1 bis 7 oder dem gemäß den Verfahren nach Anspruch 8 oder 9 herstellbaren Zusammensetzungen als elektrische Leiter und Halbleiter, als elektrochemische Sensoren und/oder als Materialien für elektrische Abschirmungen.